# EUROPÄISCHE PATENTSCHRIFT

(11) **EP 0 935 305 B1**
(45) Veröffentlichungstag und Bekanntmachung des Hinweises auf die Patenterteilung: **27.07.2011**
(21) Anmeldenummer: 99101951.4
(22) Anmeldetag: 30.01.1999
(51) Int. Cl.: H01M 10/30, H01M 10/28

(54) **Elektrodenanordnung für Nickel-Cadmium-Akkumulatoren und Verfahren zu ihrer Herstellung**
Electrode arrangement for nickel-cadmium accumulators and process of manufacture
Ensemble d'électrodes pour accumulateurs nickel-cadmium et procédé de fabrication

(30) Priorität: 06.02.1998 DE 19804649; 06.02.1998 DE 19804650
(43) Veröffentlichungstag der Anmeldung: 11.08.1999
(73) Patentinhaber: Hoppecke Batterie Systeme GmbH, 59929 Brilon (DE)
(72) Erfinder: Ohms, Detlef, Dr. Dipl.-Chem., 59929 Brilon (DE); Kitzhöfer, Willi, 59929 Brilon (DE); Schaffrath, Uwe, Dr. Dipl.-Chem., 34497 Korbach (DE); Benczur-Ürmössy, Gabor, Dr. Dipl.-Chem., 70199 Stuttgart (DE)
(74) Vertreter: Stenger, Watzke & Ring

(56) Entgegenhaltungen:
- DE-A- 3 907 690
- DE-C- 4 218 381
- US-A- 2 527 888
- US-A- 5 128 217
- US-A- 5 492 781
- GUTZEIT K ET AL: "SEALED NICKEL CADMIUM BATTERIES WITH FIBER STRUCTURED ELECTRODES" PROCEEDINGS OF THE INTERNATIONAL TELECOMMUNICATIONS ENERGY CONFERENCE. SAN DIEGO, OCT. 30 - NOV. 2, 1988, NEW YORK, IEEE, US, Bd. CONF. 10, 30. Oktober 1988 (1988-10-30), Seiten 522-527, XP000141621

## Beschreibung

Die vorliegende Erfindung betrifft eine Elektrodenanordnung für Nickel-Cadmium-(NC)-Akkumulatoren und ein Verfahren zu ihrer Herstellung. Insbesondere betrifft die Erfindung Elektrodenanordnungen für NC-Akkumulatoren, bei welchen wenigstens ein Elektrodentyp unter Anwendung der Faserstrukturtechnologie hergestellt ist.

Herkömmliche NC-Akkumulatoren werden unter Einsatz sogenannter Sinterelektroden hergestellt. Die Sinterelektroden können nur bis zu einer gegebenen Dicke hergestellt werden, so daß auch die zur Verfügung stehende Energiedichte begrenzt ist. Die Entwicklung der Faserstrukturtechnologie hat dies verbessert. Dabei werden metallisierte Faserstrukturgerüste eingesetzt, welche durch Metallisieren poröser Vliesstoffe oder Nadelfilze aus elektrisch nicht leitenden Kunststoffasern hergestellt werden. Derartige Faserstrukturelektroden können dicker ausgebildet werden, so daß bei gleicher Energiedichte der Akkumulator kleiner oder leichter ausgebildet werden kann oder bei gleicher Größe eine höhere Kapazität bereitgestellt werden kann. Faserstrukturelektroden haben auch den Vorteil einer größeren Lebensdauer. Allerdings benötigen die Faserstrukturelektroden eine etwas höhere Ladespannung als Zellen mit Sinterpositiven. Dadurch erfordert der Einsatz von NC-Akkumulatoren mit Faserstrukturelektroden die Berücksichtigung des Bedarfs an höherer Ladespannung. Gleichzeitig kann sich eine erhöhte Ladespannung ungünstig auf den Wasserverbrauch auswirken.

Alkalische Zellen wie die NC-Akkumulatoren können in geschlossenem und offenen Design gebaut werden.

Bei offener Bauweise werden die am Ladeende entstehenden Gase abgeleitet. Der Separator trennt dabei nicht nur die Elektroden sondern verhindert das Durchtreten der Gase.

Dagegen wird bei geschlossenem Design der an der positiven Elektrode entstehende Sauerstoff direkt zu den geteilten negativen Elektroden geleitet. Dadurch vermindert sich die Ladespannung am Ladeende. Bei gasdicht ausgebildeten NC-Akkumulatoren mit Faserstrukturelektroden wird der Sauerstoff über die Gasphase und eine poröse, gasleitende Zwischenschicht zwischen den negativen Elektroden geführt. Die geschlossene Bauweise erfordert die Begrenzung der Elektrolytmenge um genügend elektrolytfreie Gaskanäle zu erhalten. Die geschlossenen NC-Zellen in Fasertechnologie benutzen darüber hinaus eine gasmäßige Evakuierung des Zellgefäßes bei der Fertigung und eine dauerhafte Hermetisierung um den Gastransport zu erleichtern. Durch die Begrenzung der Elektrolytmenge vermindert sich die Wärmekapazität der Zellen deutlich und erhöht damit die Gefahr des Überhitzens bei Überladung der Zellen.

Ausgehend von dem beschriebenen Stand der Technik liegt der vorliegenden Erfindung die Aufgabe zugrunde, prismatische Nickel-Cadmium-Akkumulatoren ohne Elektrolytmengenbegrenzung herstellen zu können, welche Faserstrukturelektroden aufweisen, die unter Beibehaltung der oben beschriebenen Vorteile gegenüber herkömmlichen NC-Akkumulatoren in Bezug auf die Ladespannung zu diesen kompatibel sind, also demgegenüber keine höheren Ladespannungen benötigen, und im Hinblick auf den Wasserverbrauch einen verringerten Wartungsaufwand haben. Weiterhin soll die Herstellung vereinfacht werden.

Verfahrensseitig wird zur technischen Lösung der Aufgabe vorgeschlagen ein Verfahren zur Herstellung von Elektrodenanordnungen für NC-Akkumulatoren unter wenigstens teilweiser Verwendung von Faserstrukturelektroden, wobei positive und negative plattenförmige Elektroden hergestellt, unter Zwischenlegen von Separatormaterial, wechselweise zur Bildung eines Elektrodenpakets in vorgegebener Anzahl gestapelt und die gleichgerichteten Elektroden jeweils untereinander mittels Polbrücken verbunden werden, wobei das Elektrodenpaket vollflächig unter Kompression des zwischen den Elektroden befindlichen Separatormaterials gepreßt und formstabil fixiert wird, welches zumindest im eingebauten und gepreßten Zustand einen Gastransfer parallel zu den Oberflächen der plattenförmigen Elektroden liegenden Richtungen im wesentlichen hindert, quer zu den Oberflächen der plattenförmigen Elektroden jedoch im wesentlichen gestattet und Kavitäten zur zeitweisen Zwischenspeicherung von Gas aufweist. Der Separator wird zwischen den Elektroden auf 70% bis 90% selner Ursprungsdicke komprimiert. Verwendet wird ein sogenanntes Faservlies als Separatormaterial, welches gemäß der Erfindung mehrlagig eingesetzt wird.

Als Separatormaterial wird ein Faservlies mit einer, eine ausreichende Gasspeicherung gewährleistenden Dicke von mindestens 0,5 bis etwa 1 mm, die sich auch im Flächengewicht ausdrückt, verwendet, welches vollständig oder teilweise vom Elektrolyten benetzbar ist und vorzugsweise aus einem Polyamid oder Polyolefin oder ähnlichen Polymeren bzw. Gemischen dieser Stoffe besteht, wobei Polyamid bevorzugt wird. Das Separatormaterial soll eine dauerhafte Elastizität aufweisen, die einen beständigen mechanisch bündigen Kontakt zu den Elektroden gewährleistet.

Überraschend hat sich herausgestellt, daß die nach dem erfindungsgemäßen Verfahren hergestellten Elektrodenanordnungen die Vorteile der NC-Akkumulatoren mit Faserstrukturelektroden gegenüber herkömmlichen NC-Akkumulatoren nicht verändern, darüber hinaus aber mit niedrigen Ladespannungen auskommen, also gegenüber den anderen Systemen kompatibel sind, und einen geringeren Wartungsaufwand benötigen, da der Wasserverbrauch gegenüber herkömmlichen NC-Akkumulatoren erheblich reduziert ist. Dies ist bedingt durch die Fixierung des in der Überladephase gebildeten Sauerstoffs im Elektrodenpaket und dessen anschließendem Verzehr an der Negativen, sowie eines verbesserten Wärmehaushalt, der sich auch durch die Verwendung niedrigerer Ladespannungen ergibt. Wesentlich ist, daß die Pressung vor der sogenannten Inbetriebsetzungsladung, also der Initialladung erfolgt und das Elektrodenpaket formstabil im gepreßten Zustand fixiert wird.

Es wird angenommen, daß die Aufnahmefähigkeit und das Rückhaltevermögen des Separatormaterials für Sauerstoff und der damit gewährleistete gleichmäßige Verzehr des Sauerstoffs an der negativen Elektrode ein wesentlicher Aspekt der Erfindung ist. Aus dem weiten Bereich verschiedener Separatormaterialien sind nur Vliesseparatoren für diesen Zweck geeignet. Sie sind aus Fasern mit statistischer Verteilung aufgebaut im Gegensatz zu gerichteten Geweben, die Faserbündel mit bestimmten Vorzugsrichtungen enthalten. Die Faservliesseparatoren sind hochporös im Unterschied zu anderen Separatortypen. Die Porosität liegt zwischen 70 und 90%. Dank der Elastizität der Vliesseparatoren in Richtung der Dicke, also senkrecht zu den Elektrodenoberflächen wird durch die Pressung bei der Herstellung des Zellstapel und Fixierung in dieser Lage der Raum zwischen den Elektroden vollständig von den Separatoren ausgefüllt. Bei mäßiger und geregelter Ladegeschwindigkeit bzw. Ladestrom verläßt der an der positiven Elektrode entstehende gasförmige Sauerstoff das Elektrodenpaket nicht, sondern füllt die Poren unter Verdrängen des Elektrolytens. An der Grenzfläche zur negativen Elektrode wird der Sauerstoff unter Depolarisation der Elektrode verzehrt. Die Regelung der Ladegeschwindigkeit kann beispielsweise unter Konstanthaltung der Ladespannung erreicht werden. Diese Art der Regelung ist bei den erwähnten gasdichten Nickel-Cadmiumzellen nicht geeignet. Der im Betrieb an den positiven Elektroden entstehende Sauerstoff wird weder aus dem Raum zwischen den benachbarten Elektroden abtransportiert noch direkt durch das Separatormaterial an die negativen Elektroden herangeführt, sondern teilweise zur negativen Elektrode geführt, teilweise zwischengespeichert. Somit wird ein lang anhaltender, kontinuierlicher Gaszustrom zur negativen Elektrode gewährleistet, der deren Ladezustand und damit die Polarisation begrenzt, die zum Anstieg der Ladeendspannung führen würde. Der gleichmäßige Verzehr des Sauerstoffs und der Elekrolytüberschuß mindert die Gefahr des Überhitzens. Durch das Pressen des Elektrodenpaketes wird parallel zu den Elektrodenoberflächen der Separator für den Sauerstofftransport gesperrt, quer dazu wird ein Widerstand gegen die Überführung des Sauerstoffs erzeugt, der ein Zwischenspeichern bewirkt. Wesentlich ist, daß ein bedeutender Anteil des in der Überladephase gebildeten Sauerstoffs, der zwischen 70 und 98% liegen kann, auf diese Weise verzehrt wird, obwohl die Zelle ohne Elektrolytmengenbegrenzung auskommt. Vielmehr enthalten die Zellen einen hohen Elektrolytüberschuß mit einem Elektrolytstand bis über den oberen Rand des Elektrodenstapels, ähnlich wie in offenen Nickel-Cadmium-Zellen.

In vorteilhafter Weise erfolgt die Pressung unter Vorgabe einer definierten Preßkraft.

Gemäß einem vorteilhaften Vorschlag der Erfindung wird als Separatormaterial ein dauerhaft elastisches Material verwendet. Gemäß einem weiteren vorteilhaften Aspekt der Erfindung kann der Separator in Taschenform die Elektroden umgebend eingesetzt werden. Hieraus ergibt sich automatisch eine Mehrlagigkeit einerseits und ein Kantenschutz andererseits. Das Eintaschen erleichtert insbesondere auch die Handhabung der Elektroden.

Im übrigen hat der Separator alle üblichen Eigenschaften herkömmlicher Separatoren, ist also in der Lage, elektrisch zu separieren, hat eine zumindest standardgemäße lonenleitfähigkeit im elektrolytgefüllten Zustand.

Mit Vorteil wird vorgeschlagen, daß die Elektrodenplatten vor dem Auflegen des Separatormaterials oberflächlich geebnet werden. Man spricht vom sogenannten Vorkalibrieren. Das Vorkalibrieren kann gemäß einem Vorschlag der Erfindung bei gefüllten und getrockneten Elektroden mechanisch mit Hilfe von Walzen erfolgen, wobei abstehende bzw. das Dendritenwachstum fördernde metallisierte Faserenden bzw. metallisierte Faserreste weitgehend entfernt und die Rauhigkeit der Elektrodenoberflächen minimiert wird. Die Minimierung der Rauhigkeit ist von besonderer Bedeutung, denn durch die Pressung des Elektrodenpaketes kommt es zu einem dauerhaft elastischen, vollflächigen Kontakt zwischen der Oberfläche der Elektrodenplatte und dem Separatormaterial, so daß praktisch keine Gaswanderung entlang der Oberfläche der Elektrodenplatte erfolgen kann.

Die Pressung und/oder Fixierung des Elektrodenpaketes können vor dem Einbau in ein Zellengefäß aber auch in einem Zellengefäß erfolgen.

Besonders vorteilhaft hat sich die Anwendung des erfindungsgemäßen Verfahrens bei Verwendung von Elektroden erwiesen, wobei metallisierte Faserstrukturgerüste, gebildet durch Metallisieren poröser Vliesstoffe oder Nadelfilze aus elektrisch nicht leitenden Kunststoff-Fasern, verwendet werden, wobei die Porosität der zugrundeliegenden textilen Struktur zwischen 50% und 98% liegt und der Faserdurchmesser zwischen 5 und 40 µm mißt, das Flächengewicht des Vliesstoffes oder Nadelfilzes zwischen 50 g/m² und 800g/m² liegt, sowie die Dicke des textilen Materials im Bereich von 0,5 bis 5 mm liegt. Das erfindungsgemäße Verfahren erlaubt die Herstellung von NC-Akkumulatoren, welche gegenüber herkömmlichen NC-Akkumulatoren bei gleicher Kapazität leichter und kleiner sind, kompatibel hinsichtlich der Ansprüche an die Ladespannung und vergleichbar in Bezug auf den Wartungsaufwand sind. Die nach dem erfindungsgemäßen Verfahren hergestellten Elektrodenanordnungen sind neu und aus dem Stand der Technik nicht bekannt oder nahegelegt.

Vorrichtungsseitig wird zur technischen Lösung der Aufgabe vorgeschlagen eine Elektrodenanordnung für NC-Akkumulatoren mit wenigstens teilweiser Verwendung von Faserstrukturelektroden, wobei positive und negative plattenförmige Elektroden hergestellt, unter Zwischenlegen von Separatormaterial wechselweise zur Bildung eines Elektrodenpakets in vorgegebener Anzahl gestapelt und die gleichgerichteten Elektroden jeweils untereinander mittels Polbrücken verbunden sind, wobei das Elektrodenpaket vollflächig unter Kompression des zwischen den Elektroden befindlichen Separatormaterials gepreßt und formstabil fixiert ist, wozu das Elektrodenpaket zwischen mechanische Klemmelemente eingebracht ist. Es wird ein Separatormaterial verwendet, welches zumindest im eingebauten und gepreßten Zustand einen Gastransfer parallel zu den Oberflächen der plattenförmigen Elektroden liegenden Richtungen im wesentlichen hindert, quer zu den Oberflächen der plattenförmigen Elektroden jedoch im wesentlichen gestattet und Kavitäten zur zeitweisen Zwischenspeicherung von Gas aufweist. Als Separatormatarial wird ein mehrlagig angeordnetes Faservlies mit einer, eine ausreichende Gasspeicherung gewährleistenden Dicke, die sich auch im Flächengewicht ausdrückt, verwendet, welches vollständig oder teilweise vom Elektrolyten benetzbar ist und vorzugsweise aus einem Polyamid oder Polyolefin oder ähnlichen Polymeren bzw. Gemischen dieser Stoffe besteht, wobei Polyamid bevorzugt wird. Das Separatormaterial soll eine dauerhafte Elastizität aufweisen, die einen beständigen mechanisch bündigen Kontakt zu den Elektroden gewährleistet.

Die Elektrodenplatten können in gestapeltem Zustand zunächst vor Einbau in ein Zellengehäuse gepreßt und durch Anordnung entsprechender Elemente fixiert werden. Beispielsweise können auf die äußeren Elektrodenplatten Rahmenplatten aufgelegt werden, die nach der Pressung mit entlang der Seitenkanten der Elektrodenplatte verlaufenden Stegen verbunden werden. Dabei kann die Verbindung durch Schweißen, Schrauben oder dergleichen erfolgen, auch kann die Verbindung nachstellbar sein, so daß Paketdicke und -drücke nachjustierbar sind.

Mit Vorteil wird vorgeschlagen, daß die äußeren Elektrodenplatten negative Platten sind, auf denen das Klemmrahmenmaterial ohne Zwischenlage von Separatormaterial aufliegt.

Die erfindungsgemäße Elektrodenanordnung erlaubt die Herstellung von neuartigen NC-Akkumulatoren, welche gegenüber herkömmlichen NC-Akkumulatoren bei gleicher Kapazität leichter und kleiner sind, kompatibel hinsichtlich der Ansprüche an die Ladespannung und vergleichbar in Bezug auf den Wartungsaufwand sind. Die erfindungsgemäßen Elektrodenanordnungen sind neu und aus dem Stand der Technik nicht bekannt oder nahegelegt.

Weitere Vorteile und Merkmale der Erfindung ergeben sich aus der folgenden Beschreibung anhand der Figuren.

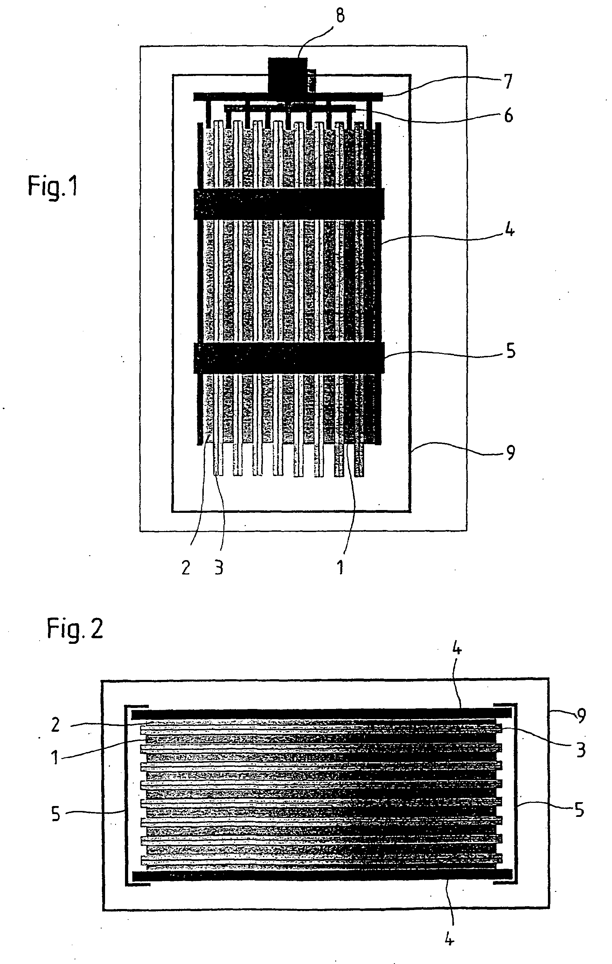

- Figur 1: eine Seitenansicht eines Ausführungsbeispiels für eine Elektrodenanordnung nach der Erfindung,
- Figur 2: eine Ansicht des Ausführungsbeispiels von unten,
- Figur 3: eine mögliche Fixierung des Elektrodenstapels unter Verwendung von elastisch wirkenden Spannbändern um die Druckplatten,
- Figur 4: eine Ansicht gemäß Figur 3 von unten,
- Figur 5: eine mögliche Fixierung des Elektrodenstapels unter Verwendung von Stützelementen, die die Kraftwirkung auf die Zellwandung bzw. deren Kanten ableiten,
- Figur 6: eine Ansicht gemäß Figur 5 von unten,
- Figur 7: die Verwendung von Druckschalen die durch Verschweißen, Ver- schrauben oder eine andere form- bzw. kraftschlüssige Verbindungstechnik fixiert werden,
- Figur 8: eine Ansicht gemäß Figur 7 von unten, und
- Figur 9: die Verwendung von Separatortaschen um alle Elektroden unter beispielhafter Anwendung des Ausführungsbeispiels gemäß Figuren 7 und 8.

In den Teilfiguren sind gleiche Elemente mit gleichen Bezugszeichen versehen.

Positive Elektroden 1 und negative Elektroden 2 sind vorzugsweise beide als sogenannte Faserstrukturelektroden ausgebildet und abwechselnd unter Zwischenlage von Separatormaterial 3 zu einem Elektrodenpaket gestapelt. Die positiven Elektroden 1 sind mit einer Polplatte 6, die negativen Elektroden 2 mit einer davon elektrisch getrennten Polplatte 7 verbunden und mit dem Polbolzen 8 versehen. Beidseitig sind auf die Elektroden Druckplatten 4 aufgelegt und durch Spannelemente 5, vorzugsweise Spannstege oder Spannklammern verbunden. Die Verbindung kann beispielsweise durch Schrauben, Schweißen und dergleichen erfolgen. Die Baugruppe ist in ein Zellgehäuse 9 eingesetzt.

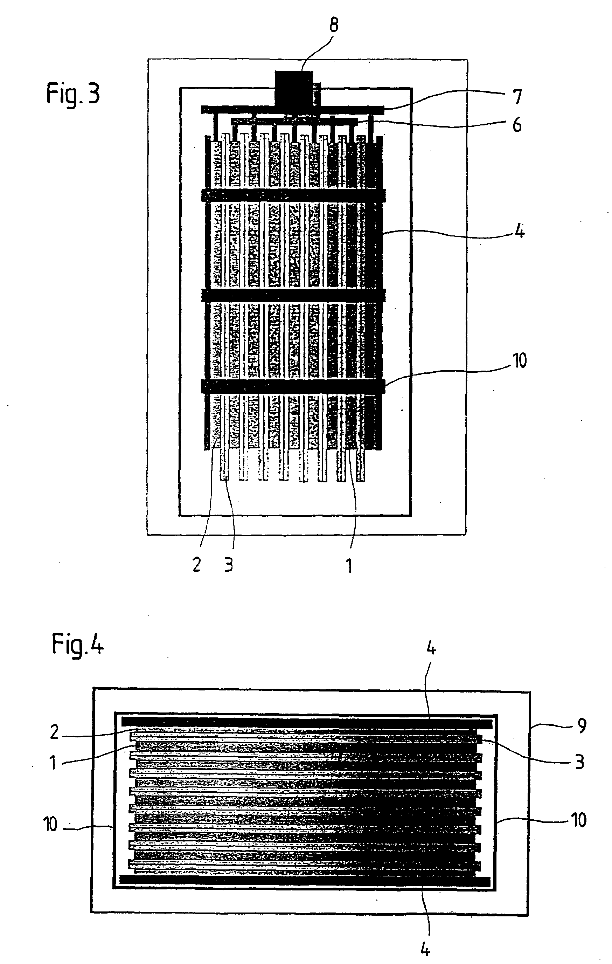

Figuren 3 und 4 zeigen eine alternative Ausführungsform, wobei der Elektrodenstapel in gleicher Weise beidseitig mit Druckplatten 4 belegt ist, die jedoch durch Spannbänder 10 verbunden sind. Die Spannbänder 10 können dabei durch Klebe- oder Schweißtechniken, aber auch durch andere an sich bekannte Fügetechniken verbunden sein.

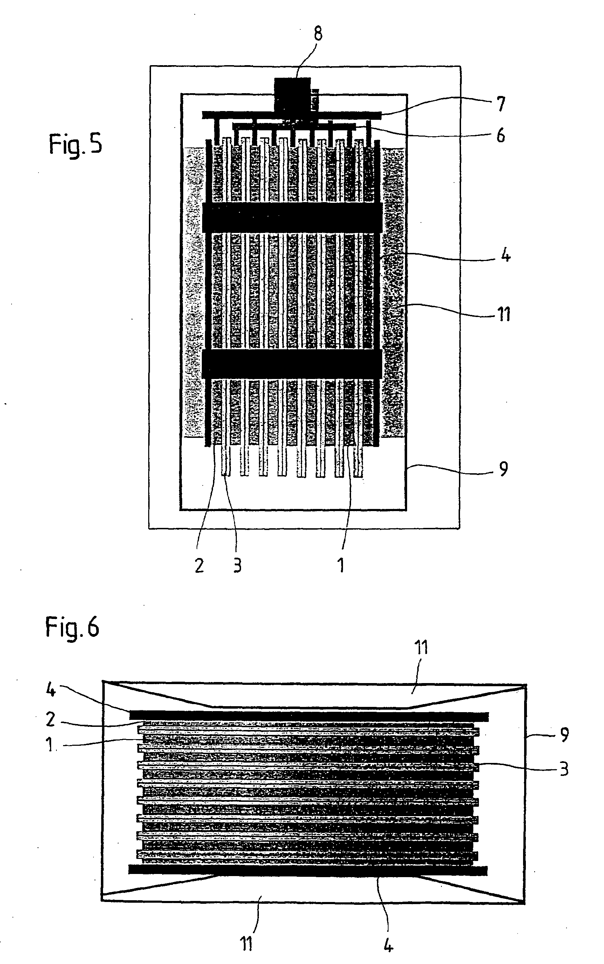

Eine weitere alternative Ausführungsform ist in den Figuren 5 und 6 gezeigt. Hier sind die Elektrodenplatten mit Druckplatten 4 beidseitig belegt. Jedoch erfolgt die Fixierung der Pressung im Inneren des Zellgehäuses 9 durch entsprechende Stützelemente 11. Vorzugsweise sind die Stützelemente 11 im Inneren der Zellgehäuse so angeordnet, daß die Kräfte über die Ecken abgeleitet werden. Eine außerhalb des Gehäuses vorgenommene Pressung des Elektrodenstapels wird durch die Stützelemente 11 im Gehäuseinneren fixiert.

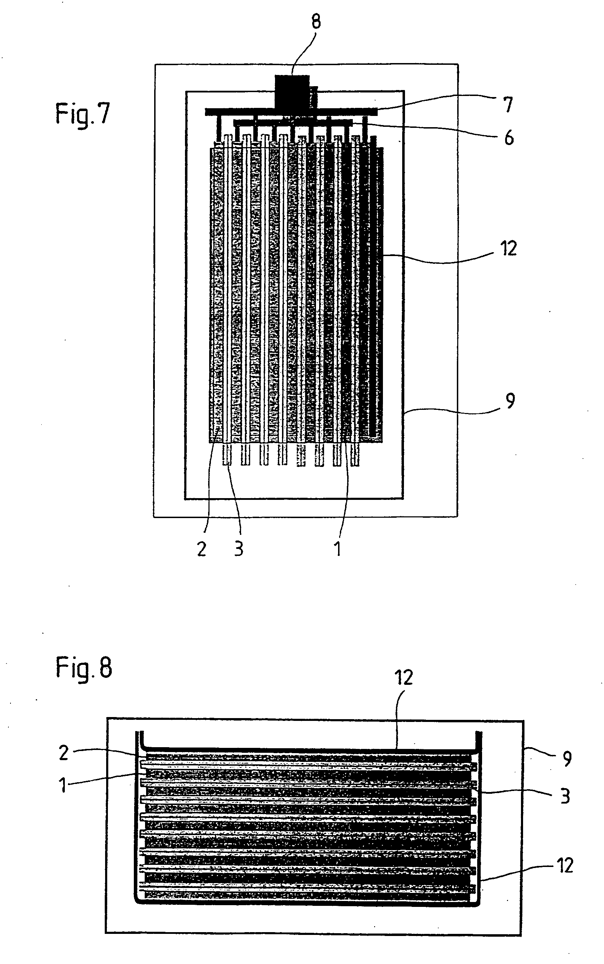

Eine weitere alternative Ausführungsform ist in den Figuren 7 und 8 gezeigt. Hier werden anstelle von Druckplatten beidseitig auf die Elektroden Druckschalen 12 aufgelegt, die beim Zusammenbau unter Kraftwirkung aufeinandergepreßt und fixiert werden. Die Fixierung erfolgt durch eine kraft- oder formschlüssige Verbindungstechnik. Vorteilhaft kann eine Punktschweißung eingesetzt werden, durch welche die Schalen miteinander verbunden werden.

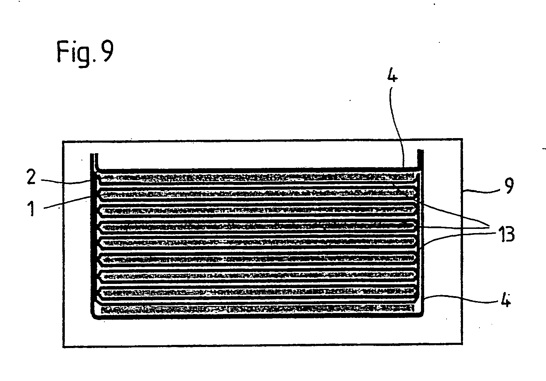

Schließlich ist in Figur 9 die Verwendung von Separatortaschen um alle Elektroden dargestellt, und zwar unter beispielhafter Anwendung des Ausführungsbeispiels gemäß Figuren 7 und 8.

Die Separatortaschen, beispielsweise aus Vliesmaterial, umgeben alle Elektrodenplatten. Die Taschen um die außenliegenden negativen Elektroden sind aufgeschnitten und dienen dem Schutz der seitlichen Kanten der Elektroden. Die Separatortaschen sind mit dem Bezugszeichen 13 versehen.

Die beschriebenen Ausführungsbeispiele dienen der Erläuterung und sind nicht beschränkend.

### Bezugszeichenliste

- 1: positive Elektrode
- 2: negative Elektrode
- 3: Separator
- 4: Druckplatte
- 5: Spannelement
- 6: Polplatte (plus)
- 7: Polplatte (minus)
- 8: Polbolzen
- 9: Zellgehäuse
- 10: Spannband
- 11: Stützelement
- 12: Druckschale
- 13: Separatortaschen

## Patentansprüche

1. Verfahren zur Herstellung von Elektrodenanordnungen für NC-Akkumulatoren unter wenigstens teilweiser Verwendung von Faserstrukturelektroden, wobei positive und negative plattenförmige Elektroden hergestellt, unter Zwischenlage von Separatormaterial wechselweise zur Bildung eines Elektrodenpakets in vorgegebener Anzahl gestapelt und die gleichgerichteten Elektroden jeweils untereinander mittels Polbrücken verbunden werden, wobei das Elektrodenpaket vollflächig unter Kompression des zwischen den Elektroden befindlichen Separatormaterials gepreßt und formstabil fixiert wird, wobei als Separatormaterial Faservlies mehrlagig angeordnet wird, welches zumindest im gepreßten und fixierten Zustand in unterschiedlichen Richtungen eine unterschiedliche Gasdurchlässigkeit aufweist, derart, daß ein Gastransfer parallel zu den Oberflächen der plattenförmigen Elektroden liegenden Richtungen im wesentlichen verhindert, quer zu den Oberflächen der plattenförmigen Elektroden jedoch im wesentlichen ermöglicht wird, und welches Kavitäten zur zeitweisen Zwischenspeicherung von Gas aufweist, wobei der Separator im Elektrodenstapel oder in der Zelle auf 70 % bis 90 % seiner Ausgangsdicke komprimiert wird.

2. Verfahren nach Anspruch 1, **dadurch gekennzeichnet, daß** die Kompression mit einem vordefinierten Druck erfolgt.

3. Verfahren nach einem der vorhergehenden Ansprüche, **dadurch gekennzeichnet, daß** als Separatormaterial ein dauerhaft elastisches Material verwendet wird.

4. Verfahren nach einem der vorhergehenden Ansprüche, **dadurch gekennzeichnet, daß** der Separator eine ausreichenden Dicke aufweist, die sich in einem Flächengewicht zwischen 70 und 200 g / m² widerspiegelt.

5. Verfahren nach einem der vorhergehenden Ansprüche, **dadurch gekennzeichnet, daß** der Separator zu Taschen ausgebildet wird, in die die Elektrodenplatten eingesetzt werden.

6. Verfahren nach einem der vorhergehenden Ansprüche, **dadurch gekennzeichnet, daß** die Elektrodenplatten mit glatten, ebenen Oberflächen versehen werden.

7. Verfahren nach einem der vorhergehenden Ansprüche, **dadurch gekennzeichnet, daß** die Pressung des Elektrodenpaketes vor dem Einbau in ein Zellengefäß erfolgt.

8. Verfahren nach einem der Ansprüche 1 bis 6, **dadurch gekennzeichnet, daß** die Pressung des Elektrodenpaketes im Zellengefäß erfolgt.

9. Elektrodenanordnung für NC-Akkumulatoren mit wenigstens teilweiser Verwendung von Faserstrukturelektroden, wobei positive und negative plattenförmige Elektroden in vorgegebener Anzahl unter Zwischenlage von Separatormaterial wechselweise zur Bildung eines Elektrodenpakets gestapelt und die gleichgerichteten Elektroden jeweils untereinander mittels Polbrücken verbunden sind, wobei das Separatormaterial ein mehrlagig angeordnetes Faservlies ist und ein Rückhaltevermögen und eine Aufnahmefähigkeit von Gas aufweist und das Elektrodenpaket vollflächig unter Kompression des zwischen den Elektroden befindlichen Separatormaterials gepreßt und formstabil durch Anordnen des Elektrodenpakets zwischen mechanischen Klemmelementen fixiert ist, wobei der Separator im Elektrodenstapel oder in der Zelle auf 70 % bis 90 % seiner Ausgangsdicke komprimiert ist.

10. Elektrodenanordnung nach Anspruch 9, **dadurch gekennzeichnet, daß** das Separatormaterial zumindest im eingebauten und gepreßten Zustand einen Gastransfer parallel zu den Oberflächen der plattenförmigen Elektroden liegenden Richtungen im wesentlichen hindert, quer zu den Oberflächen der plattenförmigen Elektroden jedoch im wesentlichen gestattet und Kavitäten zur zeitweisen Zwischenspeicherung von Gas aufweist.

11. Elektrodenanordnung nach einem der Ansprüche 9 oder 10, **dadurch gekennzeichnet, daß** das Separatormaterial ein dauerhaft elastisches Material ist.

12. Elektrodenanordnung nach einem der Ansprüche 9 bis 11, **dadurch gekennzeichnet, daß** der Separator zu Taschen ausgebildet ist, in die die Elektrodenplatten eingesetzt sind.

13. Elektrodenanordnung nach einem der Ansprüche 9 bis 12, **dadurch gekennzeichnet, daß** die Elektrodenplatten mit glatten, ebenen Oberflächen ausgebildet sind.

14. Elektrodenanordnung nach einem der Ansprüche 9 bis 13, **dadurch gekennzeichnet, daß** die Pressung und Fixierung innerhalb eines Akkumulatoren-Zellengehäuses durch eine Abstützung durch ein Zellengehäuse gebildet ist.

15. Elektrodenanordnung nach Anspruch 14, **dadurch gekennzeichnet, daß** die Abstützung im Kantenbereich des Zellengehäuses ausgebildet ist.

16. Elektrodenanordnung nach einem der Ansprüche 9 bis 15, **dadurch gekennzeichnet, daß** die Elektrodenplatten in einen Klemmrahmen eingesetzt sind.

17. Elektrodenanordnung nach Anspruch 16, **dadurch gekennzeichnet, daß** der Klemmrahmen käfigartig ausgebildet ist.

18. Elektrodenanordnung nach einem der Ansprüche 16 oder 17, **dadurch gekennzeichnet, daß** der Klemmrahmen Spannklammern umfaßt.

19. Elektrodenanordnung nach einem der Ansprüche 16 bis 18, **dadurch gekennzeichnet, daß** der Klemmrahmen einstellbar ist.

20. Elektrodenanordnung nach einem der Ansprüche 16 bis 19, **dadurch gekennzeichnet, daß** die Klemmrahmenelemente durch Schweißen verbunden sind.

21. Elektrodenanordnung nach einem der Ansprüche 16 bis 20, **dadurch gekennzeichnet, daß** die Klemmrahmenelemente durch Schrauben verbunden sind.

22. Elektrodenanordnung nach einem der Ansprüche 16 bis 21, **dadurch gekennzeichnet, daß** die Klemmrahmenelemente formschlüssig verbunden sind.

23. Elektrodenanordnung nach einem der Ansprüche 16 bis 22, **dadurch gekennzeichnet, daß** der Klemmrahmen aus Metall oder metallisiertem Kunststoff gebildet ist, wobei vorzugsweise als metallische Komponenten Eisenwerkstoffe, Nickel bzw. vernickelte Eisenwerkstoffe verwendet werden.

24. Elektrodenanordnung nach einem der Ansprüche 9 bis 23, **dadurch gekennzeichnet, daß** die äußeren Platten des Elektrodenpaketes negative Elektrodenplatten sind.

25. Elektrodenanordnung nach Anspruch 24, **dadurch gekennzeichnet, daß** auf den äußeren negativen Elektrodenplatten Klemmrahmenelemente ohne Separatormaterial aufgelegt sind.

26. Elektrodenanordnung nach einem der Ansprüche 9 bis 25, **dadurch gekennzeichnet, daß** die Seitenkanten der Elektrodenplatten durch Separatormaterial geschützt sind.

27. Elektrodenanordnung nach einem der Ansprüche 9 bis 26, **dadurch gekennzeichnet, daß** die Elektrodenplatten Anschlußfahnen zum Anschluß an Polbrücken aufweisen, die elastisch sind.

28. NC-Akkumulator mit einer Elektrodenanordnung nach einem der Ansprüche 9 bis 27, **dadurch gekennzeichnet, daß** sich der Elektrolytspiegel über dem oberen Plattenrand befindet.

## Claims

1. A method for producing electrode arrangements for NC accumulators with use at least in part of fibre structure electrodes, wherein positive and negative plate electrodes are produced, stacked in predetermined numbers alternatingly with interposed separator material to form an electrode packet, and the electrodes with the same polarity are all interconnected via pole bridges, wherein the electrode packet is pressed together over its entire area to compress the separator material interposed between the electrodes and fixed in a shape-stable state, wherein fibre fleece is arranged in multiple plies as the separator material, which at least in the compressed and fixed condition has differing gas permeabilities in different directions, such that gas transfer in directions parallel to the surfaces of the plate electrodes is essentially prevented, but is essentially allowed in directions perpendicular to the surfaces of the plate electrodes, and which has cavities for temporary storage of gas, wherein the separator is compressed to 70% to 90% of its original thickness in the electrode stack or in the cell.

2. The method as recited in claim 1, **characterized in that** the compression takes place at a predefined pressure.

3. The method as recited in either of the preceding claims, **characterized in that** a permanently elastic material is used as the separator material.

4. The method as recited in any of the preceding claims, **characterized in that** the separator has sufficient thickness, which is reflected in a grammage between 70 and 200 g/m².

5. The method as recited in any of the preceding claims, **characterized in that** the separator is formed into pouches into which the electrode plates are inserted.

6. The method as recited in any of the preceding claims, **characterized in that** the electrode plates are furnished with smooth, flat surfaces.

7. The method as recited in any of the preceding claims, **characterized in that** the electrode packet is compressed before it is installed in the cell container.

8. The method as recited in any of claims 1 to 6, **characterized in that** the electrode packet is compressed inside the cell container.

9. An electrode arrangement for NC accumulators with use at least in part of fibre structure electrodes, wherein positive and negative plate electrodes stacked in predetermined numbers alternatingly with interposed separator material to form an electrode packet, and the electrodes with the same polarity are all interconnected via pole bridges, wherein the separator material is a fibre fleece is arranged in multiple plies and has a capacity to retain and absorb gas and the electrode packet is pressed over the full area thereof with compression of the separator material located between electrodes and is fixed in shape-stable manner by arrangement of the electrode packet between mechanical clamping elements, wherein the separator is compressed to 70% to 90% of its original thickness in the electrode stack or in the cell.

10. The electrode arrangement as recited in claim 9, **characterized in that** the separator material at least in the installed and compressed state essentially prevents gas transfer in directions parallel to the surfaces of the plate electrodes, but essentially allows gas transfer in directions perpendicular to the surfaces of the plate electrodes, and has cavities for temporary storage of gas.

11. The electrode arrangement as recited in either of claims 9 or 10, **characterized in that** the separator material is a permanently elastic material.

12. The electrode arrangement as recited in any of claims 9 to 11, **characterized in that** the separator is formed into pouches, into which the electrode plates are inserted.

13. The electrode arrangement as recited in any of claims 9 to 12, **characterized in that** the electrode plates are constructed with smooth, flat surfaces.

14. The electrode arrangement as recited in any of claims 9 to 13, **characterized in that** the pressing and fixing inside an accumulator cell housing is formed by a support via a cell housing.

15. The electrode arrangement as recited in claim 14, **characterized in that** the support is constructed in the edge area of the cell housing.

16. The electrode arrangement as recited in any of claims 9 to 15, **characterized in that** the electrode plates are inserted in a clamping frame.

17. The electrode arrangement as recited in claim 16, **characterized in that** the clamping frame is constructed in the form of a cage.

18. The electrode arrangement as recited in either of claims 16 or 17, **characterized in that** the clamping frame includes clamping brackets.

19. The electrode arrangement as recited in any of claims 16 to 18, **characterized in that** the clamping frame is adjustable.

20. The electrode arrangement as recited in any of claims 16 to 19, **characterized in that** the clamping frame elements are connected by welding.

21. The electrode arrangement as recited in any of claims 16 to 20, **characterized in that** the clamping frame elements are connected by screws.

22. The electrode arrangement as recited in any of claims 16 to 21, **characterized in that** the clamping frame elements are connected in positive locking manner.

23. The electrode arrangement as recited in any of claims 16 to 22, **characterized in that** the clamping frame is made from metal or metallised plastic, wherein ferrous materials, nickel or nickelised ferrous materials are preferably used as the metallic components.

24. The electrode arrangement as recited in any of claims 9 to 23, **characterized in that** the outer plates of the electrode packet are negative electrode plates.

25. The electrode arrangement as recited in claim 24, **characterized in that** clamping frame elements are placed on the outer, negative electrode plates without separator material.

26. The electrode arrangement as recited in any of claims 9 to 25, **characterized in that** the side edges of the electrode plates are protected by separator material

27. The electrode arrangement as recited in any of claims 9 to 26, **characterized in that** the electrode plates have elastic terminals for connection to pole bridges.

28. An NC accumulator having an electrode arrangement as recited in any of claims 9 to 27, **characterized in that** the electrolyte level is above the top edge of the plates.

## Revendications

1. Procédé de fabrication d'ensembles d'électrodes pour accumulateurs nickel-cadmium en utilisant au moins partiellement des électrodes à structure de fibres, dans lequel des électrodes en formes de plaques positives et négatives sont fabriquées, sont empilées en un nombre prédéterminé en intercalant un matériau séparateur en alternance pour former un paquet d'électrodes et les électrodes orientées dans le même sens sont respectivement reliées les unes sous les autres au moyen de barrettes de connexion, dans lequel le paquet d'électrodes est pressé sur toute la surface par compression du matériau séparateur se trouvant entre les électrodes et fixé avec une forme stable, dans lequel comme matériau séparateur un voile non tissé est disposé en plusieurs couches, lequel présente au moins dans l'état pressé et fixé dans des directions différentes une perméabilité au gaz différente, de sorte qu'un transfert de gaz soit essentiellement empêché dans les directions parallèles aux surfaces des électrodes en forme de plaques, néanmoins soit essentiellement permis transversalement aux surfaces des électrodes en forme de plaques, et lequel présente des cavités à des fins de stockage intermédiaire de gaz, dans lequel le séparateur dans la pile d'électrodes ou dans la cellule est comprimé entre 70% et 90% de son épaisseur de départ.

2. Procédé selon la revendication 1, **caractérisé en ce que** la compression est effectuée avec une pression prédéfinie.

3. Procédé selon une des revendications précédentes, **caractérisé en ce que** comme matériau séparateur un matériau durablement élastique est employé.

4. Procédé selon une des revendications précédentes, **caractérisé en ce que** le séparateur présente une épaisseur suffisante, qui se reflète dans un poids surfacique compris entre 70 et 200 g/m².

5. Procédé selon une des revendications précédentes, **caractérisé en ce que** le séparateur est réalisé en poches, dans lesquelles les plaques d'électrodes sont insérées.

6. Procédé selon une des revendications précédentes, **caractérisé en ce que** les plaques d'électrodes sont pourvues de surfaces lisses et plates.

7. Procédé selon une des revendications précédentes, **caractérisé en ce que** le pressage du paquet d'électrodes a lieu dans un bac d'accumulateur avant le montage.

8. Procédé selon une des revendications 1 à 6, **caractérisé en ce que** le pressage du paquet d'électrodes a lieu dans le bac d'accumulateur.

9. Ensemble d'électrodes pour accumulateurs nickel-cadmium en utilisant au moins partiellement des électrodes à structure de fibres, dans lequel les électrodes en forme de plaque positives et négatives sont empilées en alternance dans un nombre prédéterminé en intercalant un matériau séparateur pour former un paquet d'électrodes et les électrodes orientées dans le même sens sont respectivement reliées les unes sous les autres au moyen de barrettes de connexion, dans lequel le matériau séparateur est un voile non tissé disposé en plusieurs couches et présente une capacité de rétention et une capacité d'absorption du gaz et le paquet d'électrodes est pressé sur toute sa surface par compression du matériau séparateur se trouvant entre les électrodes et est fixé en une forme stable en disposant le paquet d'électrodes entres des éléments de serrage mécaniques, dans lequel le séparateur dans la pile d'électrodes ou dans la cellule est comprimé entre 70% et 90% de son épaisseur de départ.

10. Ensemble d'électrodes selon la revendication 9, **caractérisé en ce que** le matériau séparateur au moins en l'état monté et pressé empêche essentiellement un transfert de gaz dans les directions parallèles aux surfaces des électrodes en forme de plaques, le permet néanmoins essentiellement transversalement aux surfaces des électrodes en forme de plaques et présente des cavités à des fins de stockage intermédiaire périodique du gaz.

11. Ensemble d'électrodes selon une des revendications 9 ou 10, **caractérisé en ce que** le matériau séparateur est un matériau durablement élastique.

12. Ensemble d'électrodes selon une des revendications 9 à 11, **caractérisé en ce que** le séparateur est réalisé en poches, dans lesquelles les plaques d'électrodes sont insérées.

13. Ensemble d'électrodes selon une des revendications 9 à 12, **caractérisé en ce que** les plaques d'électrodes sont réalisées avec des surfaces lisses et plates.

14. Ensemble d'électrodes selon une des revendications 9 à 13, **caractérisé en ce que** le pressage et la fixation à l'intérieur d'un logement compartimenté en cellules d'accumulateurs est formé par un appui à travers un logement compartimenté en cellules.

15. Ensemble d'électrodes selon la revendication 14, **caractérisé en ce que** l'appui est réalisé dabs la zone d'arête du logement compartimenté en cellules.

16. Ensemble d'électrodes selon une des revendications 9 à 15, **caractérisé en ce que** les plaques d'électrodes sont insérées dans un cadre de serrage.

17. Ensemble d'électrodes selon la revendication 16, **caractérisé en ce que** le cadre de serrage est réalisé en forme de cage.

18. Ensemble d'électrodes selon une des revendications 16 ou 17, **caractérisé en ce que** le cadre de serrage comprend des brides de serrage.

19. Ensemble d'électrodes selon une des revendications 16 à 18, **caractérisé en ce que** le cadre de serrage peut être ajusté.

20. Ensemble d'électrodes selon une des revendications 16 à 19, **caractérisé en ce que** les éléments de cadre de serrage sont reliés par soudure.

21. Ensemble d'électrodes selon une des revendications 16 à 20, **caractérisé en ce que** les éléments de cadre de serrage sont reliés par des vis.

22. Ensemble d'électrodes selon une des revendications 16 à 21, **caractérisé en ce que** les éléments de cadre de serrage sont reliés par conjonction de forme.

23. Ensemble d'électrodes selon une des revendications 16 à 22, **caractérisé en ce que** le cadre de serrage est formé à partir de métal ou de plastique métallique, dans lequel de préférence des matériaux ferreux, du nickel ou des matériaux ferreux nickelés sont employés comme composants métalliques.

24. Ensemble d'électrodes selon une des revendications 9 à 23, **caractérisé en ce que** les plaques extérieures du paquet d'électrodes sont des plaques d'électrodes négatives.

25. Ensemble d'électrodes selon la revendication 24, **caractérisé en ce que** des éléments de cadre de serrage sont placés sans matériau séparateur sur les paquets d'électrodes négatives extérieurs.

26. Ensemble d'électrodes selon une des revendications 9 à 25, **caractérisé en ce que** les arêtes latérales des paquets d'électrodes sont protégées par un matériau séparateur.

27. Ensemble d'électrodes selon une des revendications 9 à 26, **caractérisé en ce que** les plaques d'électrodes présentent des cosses de raccordement pour la connexion aux barrettes de connexion, qui sont élastiques.

28. Accumulateur nickel-cadmium comportant un ensemble d'électrodes selon une des revendications 9 à 27, **caractérisé en ce que** le miroir électrolytique se trouve par dessus le bord de plaque supérieur.
